# FASCICULE DE BREVET EUROPEEN

(11) **EP 3 906 711 B1**
(45) Date de publication et mention de la délivrance du brevet: **08.11.2023**
(21) Numéro de dépôt: 20705400.8
(22) Date de dépôt: 06.01.2020
(51) Int. Cl.: H04W 4/02, H04W 48/20, H04W 36/30, H04W 36/32, H04W 84/12, H04W 36/38

(54) **PROCÉDÉ POUR LA COMMANDE PAR UN SERVEUR DE SUPERVISION DU DÉPLACEMENT D'UNE FLOTTE DE VÉHICULES A GUIDAGE AUTONOME**
VERFAHREN ZUR STEUERUNG DER BEWEGUNG EINER FLOTTE AUS AUTONOM GEFÜHRTEN FAHRZEUGEN DURCH EINEN ÜBERWACHUNGSSERVER
METHOD FOR THE CONTROL, BY A SUPERVISING SERVER, OF THE MOVEMENT OF A FLEET OF AUTONOMOUSLY GUIDED VEHICLES

(30) Priorité: 04.01.2019 FR 1900075
(43) Date de publication de la demande: 10.11.2021
(73) Titulaire: BALYO, 94200 Ivry-sur-Seine (FR)
(72) Inventeur: ORVANE, Thomas, 75020 PARIS (FR); VOISIN, Guillaume, 93160 NOISY-LE-GRAND (FR)
(74) Mandataire: IP Trust
(86) Numéro de dépôt international: PCT/FR2020/050007
(87) Numéro de publication internationale: WO 2020/141287

(56) Documents cités:
- CN-B- 104 811 923
- FR-A1- 3 050 302

## Description

### Domaine de l'invention

La présente invention concerne le domaine des véhicules à guidage automatique ou véhicule autoguidé (en anglais « Automatic guided vehicle » (AGV)) qui se déplacent de façon autonome sans l'intervention humaine notamment dans des entrepôts pour assurer la manutention grâce à une technologie de géoguidage. Le brevet européen EP3219663 de la demanderesse décrit un exemple de structure mécanique d'un tel véhicule autoguidé.

Le géoguidage s'appuie sur la reconnaissance d'éléments fixes à l'intérieur d'un bâtiment : murs, colonnes et racks pour permettre aux véhicules autoguidés de se repérer en temps réel. Ce système flexible, permet une reconfiguration rapide et économique de votre solution si besoin. Il permet aux AGV de se repérer dans leur environnement de travail de façon autonome et de calculer leurs trajets automatiquement. Grâce à cette technologie, les véhicules connaissent leur position en permanence et de façon très précise. La cartographie de l'environnement dans lequel évolue du véhicule autoguidé peut être modifiée très facilement ce qui rend cette technologie très flexible. Pour coordonner le déplacement de plusieurs véhicules autoguidés sur un même site, un superviseur commande le cantonnement des trajectoires afin d'éviter les collisions.

L'invention concerne plus particulièrement le contrôle du déplacement de véhicules autoguidés de manutention par un serveur de supervision commandant notamment le cantonnement des trajectoires d'une flotte de véhicules autoguidés par la transmission périodique d'informations numériques par un réseau radiofréquence de type WIFI. Le serveur de supervision assure la connexion en temps réel avec l'environnement de gestion de l'entrepôt (ERP, WMS, machines, portes, convoyeurs, traçabilité) et s'intègre facilement dans les processus industriels et logistiques existants.

### Etat de la technique

On connaît dans l'état de la technique les solutions de gestion d'une flotte de véhicules autoguidés développés par la société Kiva Systems devenue Amazon Robotics.

On connaît aussi le brevet FR3050302 décrivant un procédé de communication entre un système de gestion de parking et un véhicule circulant sans conducteur dans le parking, selon lequel, le parking comporte plusieurs stations de base réparties dans l'espace, et en fonction de la position instantanée du véhicule dans le parking et d'une carte numérique du parking avec la position de plusieurs stations de base, on sélectionne une station de base parmi l'ensemble des stations de base, à laquelle le véhicule relié à ce moment à l'une des stations de base sera relié ensuite pour communiquer avec le système de gestion de parking.

Le brevet CN104811923 décrit un procédé d'itinérance radio, qui est caractérisé en ce que le procédé décrit comprend les étapes suivantes :
L'équipement AC du contrôleur d'accès obtient les informations AP de chaque équipement AP de point d'accès des gestions d'équipement AC, et obtient la fin du client sans fil par les informations de planification d'itinéraire correspondantes dans le chemin ;
Les informations de planification d'itinéraire et les informations AP décrites dans les utilisations de l'équipement AC, déterminent que le client sans fil est défini par l'AP dans le chemin Il est en veille, et les informations AP de l'équipement AP actuellement déterminées sont ajoutées dans la liste des appareils AP ;
La liste AP des périphériques est envoyée au client sans fil par l'équipement AC, de sorte que le client sans fil utilise ces informations AP dans les informations d'emplacement de l'emplacement actuel du client de ligne et la liste AP des périphériques sélectionne l'équipement AP et utilise la sélection actuelle AP l'équipement effectue l'itinérance radio.

La demande de brevet internationale WO2017165873A1 décrit un exemple de procédé de mise en file d'attente de robots se dirigeant vers un emplacement de destination dans un environnement, qui comprend les étapes consistant à déterminer si un premier robot occupe l'emplacement de destination et, s'il est déterminé que le premier robot occupe l'emplacement de destination, à déterminer si un deuxième robot se dirigeant vers l'emplacement de destination est entré dans une zone de destination prédéfinie à proximité de l'emplacement de destination. Si le deuxième robot est entré dans la zone de destination prédéfinie, le procédé comprend en outre les étapes consistant à faire cheminer le deuxième robot jusqu'à un premier emplacement de file d'attente et à faire en sorte que le deuxième robot attende au premier emplacement de file d'attente jusqu'à ce que le premier robot n'occupe plus l'emplacement de destination. Ce procédé comprend également l'étape consistant à faire cheminer le deuxième robot jusqu'à l'emplacement de destination après que le premier robot a quitté l'emplacement de destination.

La demande de brevet européen EP2044494 décrit un autre exemple de procédé pour déplacer une ou plusieurs unités de commande mobiles à l'intérieur d'un espace de travail, comprenant l'étape consistant à recevoir, à partir d'une première unité de commande mobile, une demande de réservation qui demande l'utilisation d'un premier segment de chemin pour se déplacer dans une première direction. Le procédé comprend en outre l'étape consistant à déterminer qu'une deuxième unité de commande mobile est actuellement située sur le premier segment de chemin, et à déterminer que la deuxième unité de commande mobile se déplace dans la première direction. De plus, le procédé comprend l'étape consistant à transmettre une réponse de réservation qui indique que la demande de réservation est refusée, en réponse à l'étape qui détermine que la deuxième unité de commande mobile ne se déplace pas dans la première direction. Le procédé comprend également l'étape consistant à transmettre une réponse de réservation qui indique que la demande de réservation est acceptée, en réponse à l'étape qui détermine que la deuxième unité de commande mobile se déplace dans la première direction.

Une autre solution de gestion de flotte d'engins autonomes est décrite dans le brevet européen EP0618523B1. Ce procédé permettant de commander le transport d'une pluralité de véhicules sans conducteur se déplaçant le long de trajets de déplacement formés à partir d'une pluralité de trajets de connexion qui connectent des noeuds constituant des positions d'arrêt de véhicules comprend :
- une première opération consistant à chercher un trajet de déplacement optimal, qui connecte un noeud courant à un noeud de destination, présentant un coût minimal pour chaque véhicule sans conducteur, par calcul des coûts de déplacement pour des intervalles de transport possibles connectant ledit noeud courant et ledit noeud de destination sur la base de la distance ou du temps de déplacement entre lesdits noeuds, et de la différence angulaire entre la direction de chaque noeud lorsque deux noeuds adjacents constituant ledit trajet de déplacement sont vus depuis le noeud de destination dudit véhicule sans conducteur;
- une deuxième opération consistant à trouver, dans la pluralité de trajets de déplacement optimaux obtenus au cours de l'opération 1, des intervalles de sens opposés constituant des trajets de déplacement qui ont des sens mutuellement opposés ;
- une troisième opération consistant à arrêter le traitement si des intervalles de sens opposés ne sont pas présents, et, si des intervalles de sens opposés sont présents, à calculer alors un coût total pour chaque véhicule sans conducteur par totalisation des coûts des intervalles de sens opposés présents dans le trajet de déplacement de chaque véhicule sans conducteur ;

- une quatrième opération consistant à appliquer un sens spécifié à un intervalle de sens opposés se trouvant sur le trajet de déplacement du véhicule sans conducteur qui possède le coût total le plus élevé, si bien que cet intervalle a un certain sens ;
- une cinquième opération consistant à déterminer de nouveau les trajets de déplacement optimaux de tous les véhicules sans conducteur, avec l'application ci-dessus mentionnée d'un sens spécifié aux trajets de déplacement ;
où les trajets de déplacement optimaux n'ayant pas de conflit sont déterminés par la répétition des opérations 2 à 5 jusqu'à ce que des intervalles de sens opposés ne soient plus trouvés lors de l'opération 2, le traitement étant arrêté à l'opération 3.

Le brevet européen EP2036014 concerne un procédé permettant de déplacer une unité de commande mobile à l'intérieur d'un espace de travail, avec réception d'un chemin. Le chemin comprend au moins un segment initial et un ou plusieurs segments supplémentaires. Le segment initial comprend une partie du chemin située à proximité du premier point; au moins un des segments supplémentaires comprend une partie du chemin située à proximité du deuxième point. Le procédé englobe le stockage du chemin, la réservation du segment initial du chemin et l'écartement par rapport au premier point le long du segment initial. Après l'amorce du déplacement le long du segment initial, le procédé comprend la réservation de chacun des segments supplémentaires du chemin et le déplacement en direction du deuxième point le long de chacun des segments supplémentaires pendant la réservation du segment correspondant.

Le brevet américain US10017322 concerne une solution où les véhicules autoguidés communiquent sans fil avec le système informatique central et sont entièrement ou en grande partie contrôlées par celui-ci. Dans certains modes de réalisation décrit, le système informatique central est configuré pour contrôler le mouvement des unités de transport motorisées à travers l'installation de stockage de produit sur la base d'une variété d'entrées.

Par exemple, le système informatique central communique avec chaque unité de transport motorisé via le réseau, qui peut être un ou plusieurs réseaux sans fil d'un ou plusieurs types de réseaux sans fil (tels qu'un réseau local sans fil, un réseau local sans fil , un réseau maillé sans fil, un réseau en étoile sans fil, un réseau étendu sans fil, un réseau cellulaire, etc.), capable de fournir une couverture sans fil de la plage souhaitée des unités de transport motorisées conformément à tout protocole sans fil connu, y compris mais ne se limite pas à un réseau cellulaire, Wi-Fi, Zigbee ou Bluetooth.

Le brevet chinois CN107864210 décrit un système de surveillance à distance d'un chariot élévateur à fourche. Le système comprend un contrôleur de chariot élévateur à fourche; un module de commande principal en communication avec le module de commande qui obtient des informations sur l'état du chariot élévateur via le contrôleur de chariot élévateur, génère un message en fonction des informations d'état du chariot élévateur et envoie le message; un serveur qui est en communication avec le module de contrôle principal, reçoit le message du module de contrôle principal, analyse le message et stocke le message dans une base de données; et un terminal mobile qui est en connexion de communication avec le serveur et surveille le chariot élévateur en temps réel. Le système de surveillance à distance du chariot élévateur, fourni par l'invention, obtient les informations d'état du chariot élévateur via le contrôleur de chariot élévateur, génère le message à partir des informations d'état du chariot élévateur à l'aide du module de commande principal et envoie le message au serveur. Le personnel de maintenance établit une connexion avec le serveur via le terminal mobile pour surveiller le chariot élévateur en temps réel.

Ces solutions de l'art antérieur nécessitent une communication radio-fréquence fiable entre chacun des véhicules autoguidés et le serveur de supervision, afin d'assurer la transmission constante des informations provenant de chacun des véhicules vers le serveur de supervision ainsi que l'envoi périodique, à une fréquence élevée, des instructions de déplacement ou d'arrêt par le serveur de supervision à chacun des véhicules autoguidés.

Dans des espaces d'exploitation étendus, tels que des entrepôts de grandes dimensions, la couverture radiofréquence est assurée par une pluralité de points d'accès WIFI répartis sur la zone concernée. Ceci nécessite la gestion par chaque engin autonome du transfert intercellulaire (en anglais « handover »). Le transfert intercellulaire ne fait pas partie des spécifications des standards WIFI 802.11 de base, et différentes modalités tant propriétaires que génériques sont proposées. Habituellement, le module Wifi scanne périodiquement les fréquences utilisées pour le standard Wifi afin d'identifier les points d'accès disponibles et enregistrer leur ISDN ainsi que la qualité du signal, et en cas de perte de signal, commande une séquence de connexion avec le point d'accès présentant la meilleure qualité de signal parmi la liste des points d'accès identifiés lors de l'opération de scannage. Cette solution n'est pas bien adaptée pour les applications de gestion de flottes de véhicules autoguidés car le temps de scannage peut représenter plusieurs secondes, ce qui est incompatible avec le besoin de permanence de connexion avec le serveur de supervision.

On a aussi proposé dans l'état de la technique une solution décrite dans le brevet américain US7466986B2 destinée à un équipement disposant d'une fonctionnalité WIFI et d'une fonctionnalité GPS de localisation de point d'accès. Ce dispositif détecte les points d'accès WIFI et actualise une base de données d'emplacements de points d'accès stockée localement contenant des points d'accès répertoriés géographiquement.

Lorsqu'un point d'accès est détecté, le dispositif y accède, en extrait des informations d'identification et des conditions d'utilisation, et en mesure les métriques de performance.

Le dispositif stocke le point d'accès identifié avec les coordonnées GPS sous la forme d'une entrée dans la base de données.

Lorsqu'un utilisateur souhaite ultérieurement localiser les points d'accès dans les limites d'un emplacement géographique particulier, l'utilisateur entre l'adresse physique de l'emplacement, et des points d'accès dont les coordonnées correspondent aux coordonnées GPS (ou sont proches de ces dernières) sont alors présentés à l'utilisateur. L'utilisateur peut spécifier certaines préférences en matière de conditions d'utilisation, de métriques de performance et de critères d'emplacement, l'utilitaire filtrant toutes les réponses géographiques pertinentes et ne renvoyant que les points d'accès de l'emplacement géographique qui répondent à ces préférences. Lors de la détection d'un point d'accès, l'utilitaire demande à la machine d'accéder au point d'accès et récupère des informations sur le point d'accès particulier, notamment le nom et les mesures de performances, telles que la qualité de service (QoS) et la vitesse de connexion. L'utilitaire obtient ensuite la position GPS actuelle et associe le point d'accès identifié à la coordonnée GPS actuelle. Ensuite, l'utilitaire stocke l'ID de point d'accès et les paramètres avec les coordonnées GPS actuelles sous forme d'entrée dans le HLD.

Cette solution n'apporte qu'une réponse partielle au problème de la gestion de flottes de véhicules autoguidés par un superviseur connecté via un réseau Wifi.

En effet, la solution proposée par le brevet US7466986B2 ne concerne pas l'itinérance, mais l'accès occasionnel d'un ordinateur portable à un point d'accès Wifi. La procédure de connexion peut dans ce cas prendre plusieurs centaines de millisecondes voire plusieurs secondes sans réel inconvénient.

### Inconvénients de l'art antérieur

Les solutions de l'art antérieur présentent l'inconvénient de périodes d'absence de signal résultant du temps de transfert d'un point d'accès dont la qualité de signal n'est plus suffisante à un autre point d'accès identifié comme optimal.

La latence résulte du délai correspondant au protocole d'ouverture d'un canal radio et d'authentification de l'engin sur le nouveau point d'accès. Ce délai peut également représenter un temps relativement long de quelques dizaines de millisecondes à plusieurs secondes, en cas d'anomalie dans la procédure d'authentification.

Ces délais sont très préjudiciables car pendant ce temps, soit l'engin passe en mode d'arrêt de sécurité, soit continu à se déplacer en fonction des dernières informations enregistrées, qui ne sont pas actualisées pendant ce délai.

Pour des solutions de transmission par Wifi de fichiers numériques, le temps de connexion n'est pas très sensible car les données peuvent être bufférisées afin d'assurer une fluidité sans interruption. Par contre, pour la communication d'instructions de sécurité, l'écriture dans une mémoire tampon n'est pas adaptée car les données varient rapidement et les données disponibles peuvent être obsolètes.

Par ailleurs, dans un entrepôt, le géo-positionnement par satellite GPS n'est pas toujours possible car les signaux électromagnétiques synchronisés émis par les satellites peuvent être perturbés par l'environnement métallique d'un entrepôt.

### Solution apportée par l'invention

Afin de remédier à cet inconvénient, l'invention concerne selon son acception la plus générale un procédé pour la commande par un serveur de supervision du déplacement d'une flotte de véhicules à guidage autonome dans une zone de déplacement équipée d'une pluralité de points d'accès sans fil Wifi comportant chacun au moins un moyen de géolocalisation et un module de communication Wifi, comportant une étape d'enregistrement des coordonnées desdits points d'accès, et des étapes de changement de point d'accès exécutées par chacun desdits véhicules à guidage autonome consistant à commander la déconnexion dudit module de communication Wifi du point d'accès actif et de reconnexion à un premier point d'accès dont les coordonnées enregistrées dans ladite base de données sont les plus proches des coordonnées déterminées par ledit moyen de géolocalisation,
caractérisé en ce que lesdits moyens de géolocalisation des véhicules à guidage autonome sont constitués par un moyen de mesure de déplacement relatif du véhicule par rapport à une pluralité d'éléments physiques de référence de la zone de déplacement, et en ce que ladite étape de reconnexion consiste en outre à commander la reconnexion au second point d'accès le plus proche
   - dans le cas où le délai d'authentification dudit module de communication avec le premier point d'accès dépasse une durée déterminée Tₐᵤₜ
   - et/ou dans le cas où le délai de réponse dudit serveur à un ping transmis par ledit module de communication avec le premier point d'accès dépasse une durée déterminée T_{ping}
le procédé consistant à commander l'arrêt de sécurité dudit véhicule dans le cas où le délai de reconnexion dépasse une durée T_{sécurité}.

Avantageusement ladite étape d'enregistrement des coordonnées desdits points d'accès consiste à déplacer entre une pluralité de points géolocalisés de la zone de travail un véhicule d'acquisition cartographique et à commander, lors de l'immobilisation du véhicule en un point d'acquisition, l'enregistrement des coordonnées géographiques ainsi que les identifiants des points d'accès WiFi détectés, puis à commander le déplacement vers un nouveau point d'acquisition, pour constituer une carte numérique de géolocalisation des points d'accès, ladite carte numérique étant enregistrée dans la mémoire locale de chacun desdits véhicule à guidage autonome.

Selon une variante, le procédé comporte en outre une étape d'enregistrement par une partie au moins des véhicules à guidage autonome des points d'accès absents dans ladite carte numérique et de leurs coordonnées, et de transfert périodique de ces données au serveur de supervision.

De préférence, le déplacement du véhicule à guidage autonome est commandé en fonction des données reçues du serveur de supervision bufférisées pendant les séquences d'itinérance.

Selon une variante, le calculateur du véhicule à guidage autonome commande l'arrêt de sécurité du déplacement en cas de dépassement du délai de reconnexion prédéterminé.

### Description détaillée d'un exemple non limitatif de l'invention

La présente invention sera mieux comprise à la lecture de la description détaillée d'un exemple non limitatif de l'invention qui suit, se référant au dessin annexé où :

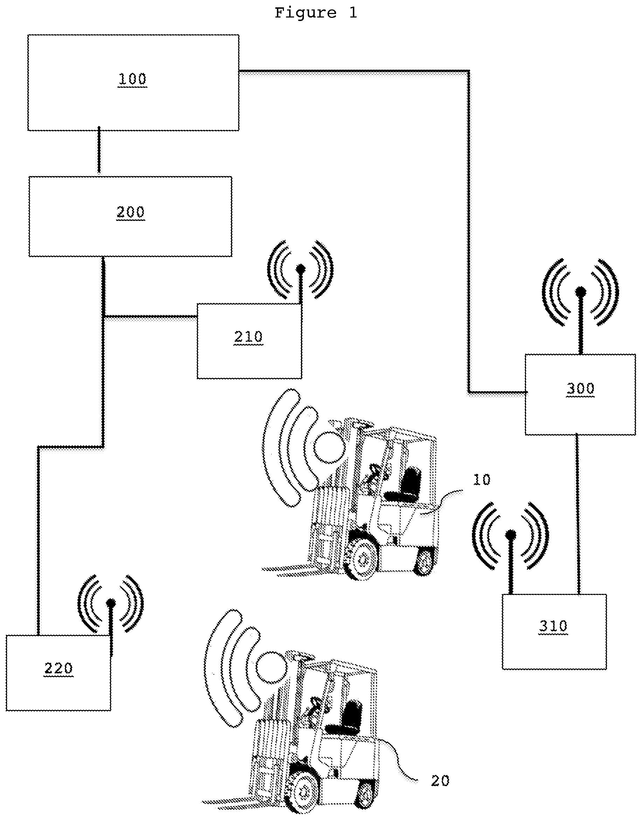

- la figure 1 représente une vue schématique d'un entrepôt équipé pour la circulation de véhicules de manutention autonomes.

### Architecture matérielle

La figure 1 représente une vue schématique d'un entrepôt équipé pour la circulation de véhicules de manutention autonomes (10, 20) sous la supervision d'un serveur (100) qui ne sera pas décrit plus en détail dans la présente demande de brevet car il correspond aux serveurs de supervision de l'art antérieur.

La communication sans fil entre le serveur (100) et chacun des véhicules de manutention autonomes (10, 20) est basée sur la norme de réseau radioélectrique IEEE 802.11 et ses évolutions communément regroupées sous l'appellation WiFi (pour « Wireless Fidelity »).

A cet effet, le serveur (100) est relié à un routeur (200) de type MU-MIMO et des points d'accès (210, 220) formant un réseaux WiFi communautaire. Les points d'accès WiFi (210, 220) comprennent différents paramètres dont un qui permet d'identifier le réseau radio, connu de l'homme du métier sous l'abréviation SSID (pour «Service Set Identifier»). Le réseau WiFi communautaire a la particularité d'utiliser un même SSID_Com pour toutes les passerelles domestiques intervenant dans ce réseau.

Le réseau communautaire n'est pas spécifique à l'invention mais correspond à l'infrastructure de communication pré-existante de l'entrepôt où est mise en oeuvre l'invention. Les points d'accès (210, 220) comprennent par exemple des répéteurs implantés en différents points de l'entrepôt pour assurer une bonne accessibilité du réseau WiFi.

Optionnellement, la couverture WiFi peut aussi être assurée par des points d'accès indépendants comprenant un routeur (300) et un ou plusieurs points d'accès (310) présentant un autre identifiant SSID_ext.

Les véhicules de manutention autonomes (10, 20) sont équipés chacun d'un module de communication WiFi et d'un ou plusieurs moyens de géolocalisation autonomes indépendants de toute infrastructure technique extérieure, en particulier indépendants du système GPS ou d'un système de balises radio-émettrices (en anglais « beacon ») afin de permettre une totale autonomie du positionnement du véhicule de manutention.

Ces moyens de géolocalisation sont constitués :
- d'un lidar assurant l'acquisition des données d'environnement du véhicule (10,20). Le lidar est couplé à la mesure du mouvement du véhicule par une centrale inertielle avec une synchronisation et un calibrage géométrique.
- de systèmes de positionnement incrémentaux selon la méthode dite de "dead reckoning", consistant à déduire la position actuelle à partir de la dernière position connue. Le véhicule (10, 20) est équipé de capteurs inertiels (accéléromètres, odomètres, gyroscopes, boussole, etc.). Ces différents dispositifs permettent de quantifier les déplacements dans l'espace. Ces données permettent de déterminer la position par la mise en concordance avec le plan de l'entrepôt. Les données d'accélération récoltées pendant la phase de mouvement permettent ensuite de déterminer de nouvelles positions. Le positionnement est relatif, la position à l'instant T-1 permettant de déterminer celle à l'instant T.

### Gestion de la flotte de véhicules (10, 20)

La gestion de la flotte de véhicules (10, 20) par le superviseur se fait par l'envoi de messages numériques périodiques, plusieurs fois par seconde, comportant des informations de service concernant le déplacement à effectuer, en fonction des données provenant en amont du serveur de supervision (100) d'un système de gestion d'entrepôts (en anglais warehouse management system ou « WMS »), destinés à gérer les opérations d'un entrepôt de stockage. En fonction de la tâche de transport et de la priorité, les ordres de transport sont classés dans un ordre optimal et les ordres de translation sont transmis aux véhicules (10, 20) appropriés.

Dans des entrepôts à allées étroites, dans lesquels les véhicules (10, 20) ne peuvent pas se dépasser mutuellement, des règles comme un droit de circulation exclusif doivent être coordonnées. Ceci signifie que le superviseur (100) donne à un véhicule (10, 20) l'utilisation exclusive d'une allée au sein d'un entrepôt pour l'exécution d'une tâche de translation. Au même moment, aucun autre chariot n'est dirigé vers cette allée.

Les messages concernant ces informations de service sont recalculés en permanence par le serveur de supervision (100), à une fréquence d'environ 10 fois par seconde et sont ensuite transmis sous forme de messages numériques à chacun des véhicules (10, 20).

Ces véhicules se déplaçant sur de vastes étendues, ils peuvent passer souvent de la zone de couverture d'un point d'accès à un autre, et l'objet de l'invention est de réduire au plus juste le temps de latence se produisant lors du basculement d'un point d'accès à un autre. En effet même si chaque véhicule (10, 20) peut buffériser les informations reçues du serveur de supervision (100) pour assurer la permanence du fonctionnement pendant la phase de transfert de point d'accès, les données enregistrées perdent rapidement leur pertinence car elles évoluent en permanence et les données bufférisées deviennent rapidement obsolètes.

Pour cela, l'invention prévoit un mode d'itinérance qui n'est pas basé sur un balayage permanent de la bande radio du standard WiFi pour détecter passivement en temps réel les point d'accès à proximité, ou par une recherche active en sondant les canaux de la bande radio par l'émission d'une trame « probe request ». L'invention prévoit une dissociation de l'étape de détection des points d'accès et de l'étape de connexion, par l'enregistrement initial d'une table des points d'accès géolocalisés disponibles.

### Cartographie des points d'accès

A cet effet, l'invention prévoit une étape préliminaire de cartographie des points d'accès (210, 220, 300, 310,...) accessibles sur la zone de travail des véhicules (10, 20). Cette étape peut être renouvelée régulièrement pour actualiser la carte. Elle consiste à déplacer de point en point un véhicule d'acquisition cartographique équipé d'un module WiFi dans toutes les parties de l'entrepôt. Lorsque le véhicule d'acquisition cartographique est immobilisé en un point Pᵢ, un calculateur embarqué sur le véhicule d'acquisition cartographique commande l'enregistrement dans une mémoire des coordonnées [xᵢ; yᵢ] du véhicule ainsi que la découverte des points d'accès détectables. Cette découverte s'effectue soit par une écoute passive en balayant la bande radio pour détecter d'un ou plusieurs points d'accès à proximité, soit par une recherche active en sondant les canaux de la bande radio par l'émission d'une trame « probe request ». Dans le premier cas, la station peut ultérieurement émettre une requête « probe request » adressée au point d'accès détecté en utilisant le SSID de ce point d'accès pour obtenir des informations complémentaires non diffusées dans la balise « beacon ». Le point d'accès SSID répond par une trame « probe response » en indiquant les capacités de transmission de la passerelle compte tenu en particulier du nombre d'utilisateurs déjà connectés à la passerelle. Dans le second cas, le point d'accès, s'il existe, répond par une trame « probe response ».

Le calculateur commande l'enregistrement pour chacun des points d'accès identifiés au point Pᵢ des informations comprenant notamment le SSID, et éventuellement d'autres informations telles que la qualité de service et/ou le protocole de communication.

Le véhicule d'acquisition cartographique est ensuite déplacé en un point suivant, et l'opération et renouvelée jusqu'à ce que toute la zone de travail soit couverte.

L'ensemble des relevés est ensuite traité pour construire une carte numérique associant à chaque zone de voisinage définie par un ensemble de coordonnées de longitudes et de latitudes qui définissent une surface un point d'accès prioritaire et optionnellement une liste hiérarchisée de points d'accès secondaires.

Cette carte numérique est enregistrée sur le serveur de supervision (100) ainsi que dans la mémoire de chacun des véhicules de manutention autonome (10, 20).

### Connexion d'un véhicule (10, 20) à un point d'accès

La connexion d'un véhicule de manutention autonome (10, 20) à un point d'accès comporte une première étape de recherche dans la carte numérique locale du point d'accès prioritaire correspondant à la localisation instantanée du véhicule (10, 20).

Le module WiFi du véhicule (10, 20) émet une requête de type « probe request » adressée au point d'accès prioritaire en utilisant le SSID de ce point d'accès pour obtenir des informations complémentaires non diffusées dans la balise « beacon ». Le point d'accès SSID répond par une trame « probe response » en indiquant les capacités de transmission de la passerelle compte tenu en particulier du nombre d'utilisateurs déjà connectés à la passerelle. Dans le second cas, le point d'accès, s'il existe, répond par une trame « probe response ».

Dans une deuxième étape, le module WiFi du véhicule (10, 20) et le point d'accès effectuent une identification mutuelle puis une étape d'association nécessaire pour que le serveur de supervision (100) puisse envoyer des données via le point d'accès.

Si l'étape d'authentification dudit module de communication avec le point d'accès ISDᵢ dépasse une durée déterminée Tₐᵤₜ, le calculateur du véhicule (10, 20) commande le démarrage d'une nouvelle étape de connexion au point d'accès secondaire de la liste hiérarchisée correspondant aux coordonnées instantanées du véhicule.

Si l'étape d'authentification aboutit dans un délai inférieur à la durée déterminée Tₐᵤₜ, le calculateur du véhicule (10, 20) commande l'émission d'un ping par le module WiFi. Dans le cas où le délai de réponse dudit serveur à un ping transmis par le module de communication avec le point d'accès ISDᵢ dépasse une durée déterminée T_{ping}, le calculateur du véhicule (10, 20) commande le démarrage d'une nouvelle étape de connexion au point d'accès secondaire de la liste hiérarchisée correspondant aux coordonnées instantanées du véhicule.

Dans le cas où le temps de reconnexion dépasse une durée T_{sécurité}, le calculateur du véhicule (10, 20) commande l'arrêt de sécurité du véhicule.

### Protocole WPA

Dans le cas d'une authentification 802.1x par négociation de clé WPA (802.1x), le calculateur exploite par exemple les compteurs EAP et notamment le compteur « EAP-Identity-Request Timeout ». Ce compteur affecte la durée d'attente entre les demandes d'identité EAP, en fonction d'un paramètre compris entre 1 et 120.

Par défaut, la durée d'attente est de trente seconde pour tenir compte du fait que certains équipements, terminaux sans fil, téléphones, scanners etc., ont du mal à répondre suffisamment rapidement.

Dans le cas de la présente invention, la durée est fixée à moins d'une seconde.

Lors du démarrage de la procédure de connexion, le module WiFi du véhicule (10, 20) envoie un message EAPOL Start au point d'accès associé à la localisation du véhicule, et le point d'accès renvoie un paquet EAP, demandant l'identité de l'utilisateur ou de la machine. A défaut de réponse, le calculateur du véhicule (10, 20) démarre une nouvelle procédure de connexion avec le point d'accès suivant.

Optionnellement, on peut aussi utiliser le compteur « EAP-Identity-Request Max Retries » La valeur Max Retries correspond au nombre de fois où le module WiFi envoie la demande d'identification au point d'accès avant de supprimer son entrée dans la MSCB. Une fois cette valeur atteinte, le module WiFi envoie une trame de désauthentification au point d'accès, commandant le redémarrage d'une procédure de reconnexion au point d'accès dont l'identifiant ISDN est le suivant dans la liste de carte numérique enregistrée. La valeur recommandée pour l'option Max Retries est comprise entre 1 et 3.

Optionnellement, on peut aussi utiliser le compteur EAPOL-Key Timeout. Pour la valeur de temporisation de la clé EAPOL, le routage fixé selon l' invention est compris entre 200 et 1000 millisecondes. Ceci signifie que lorsque les clés EAPOL sont permutées entre le point d'accès et le module WiFi, le point d'accès envoie la clé et attend la réponse du client pendant une seconde maximum. Une fois la valeur temporelle définie, le point d'accès retransmet la clé. A défaut, le calculateur commande le redémarrage d'une procédure de reconnexion au point d'accès dont l'identifiant ISDN est le suivant dans la liste de carte numérique enregistrée.

Optionnellement, on peut aussi utiliser le compteur EAPOL-Key Max Retries. La valeur EAPOL-Key Max Retries est fixée entre 0 et 3 et de préférence à 1. Ceci signifie que la tentative de demande de clé d'origine sera envoyée N fois au client. Si le point d'accès ne répond pas le calculateur commande le redémarrage d'une procédure de reconnexion au point d'accès dont l'identifiant ISDN est le suivant dans la liste de carte numérique enregistrée.

## Revendications

1. - Procédé pour la commande par un serveur de supervision (100) du déplacement d'une flotte de véhicules (10, 20) à guidage autonome dans une zone de déplacement équipée d'une pluralité de points d'accès sans fil Wifi (210, 220, 310) comportant chacun desdits véhicules au moins un moyen de géolocalisation et un module de communication Wifi, comportant une étape d'enregistrement des coordonnées desdits points d'accès, et des étapes de changement de point d'accès exécutées par chacun desdits véhicules à guidage autonome consistant à commander la déconnexion dudit module de communication Wifi du point d'accès actif et de reconnexion à un premier point d'accès dont les coordonnées enregistrées dans ladite base de données sont les plus proches des coordonnées déterminées par ledit moyen de géolocalisation,
**caractérisé en ce que** lesdits moyens de géolocalisation des véhicules à guidage autonome sont constitués par un moyen de mesure de déplacement relatif du véhicule par rapport à une pluralité d'éléments physiques de référence de la zone de déplacement, et **en ce que** ladite étape de reconnexion consiste en outre à commander la reconnexion au second point d'accès le plus proche
- dans le cas où le délai d'authentification dudit module de communication avec le premier point d'accès dépasse une durée déterminée Tₐᵤₜ
- et/ou dans le cas où le délai de réponse dudit serveur à un ping transmis par ledit module de communication avec le premier point d'accès dépasse une durée déterminée T_{ping}
le procédé consistant à commander l'arrêt de sécurité dudit véhicule dans le cas où le délai de reconnexion dépasse une durée T_{sécurité}.

2. - Procédé pour la commande par un serveur de supervision du déplacement d'une flotte de véhicules à guidage autonome selon la revendication 1 **caractérisé en ce que** ladite étape d'enregistrement des coordonnées desdits points d'accès consiste à déplacer entre une pluralité de points géolocalisés de la zone de travail un véhicule d'acquisition cartographique et à commander, lors de l'immobilisation du véhicule en un point d'acquisition, l'enregistrement des coordonnées géographiques ainsi que les identifiants des points d'accès WiFi détectés, puis à commander le déplacement vers un nouveau point d'acquisition, pour constituer une carte numérique de géolocalisation des points d'accès, ladite carte numérique étant enregistrée dans la mémoire locale de chacun desdits véhicules à guidage autonome.

3. - Procédé pour la commande par un serveur de supervision du déplacement d'une flotte de véhicules à guidage autonome selon la revendication 2 **caractérisé en ce qu'**il comporte en outre une étape d'enregistrement par une partie au moins des véhicules à guidage autonome des points d'accès absent dans ladite carte numérique et de leurs coordonnées, et de transfert périodique de ces données au serveur de supervision.

4. - Procédé pour la commande par un serveur de supervision du déplacement d'une flotte de véhicules à guidage autonome selon la revendication 1 **caractérisé en ce que** le déplacement du véhicule à guidage autonome est commandé en fonction des données reçues du serveur de supervision bufférisées pendant les séquences d'itinérance.

5. - Procédé pour la commande par un serveur de supervision du déplacement d'une flotte de véhicules à guidage autonome selon la revendication 1 **caractérisé en ce que** le calculateur du véhicule à guidage autonome commande l'arrêt de sécurité du déplacement en cas de dépassement du délai de reconnexion prédéterminé.

## Patentansprüche

1. Verfahren zum Steuern der Bewegung einer Flotte aus autonom geführten Fahrzeugen (10, 20) durch einen Überwachungsserver (100) in einem Bewegungsbereich, der mit einer Mehrzahl von drahtlosen Wifi-Zugangspunkten (210, 220, 310) ausgestattet ist, wobei jedes der Fahrzeuge mindestens ein Geolokalisierungsmittel und ein Wifi-Kommunikationsmodul umfasst, umfassend einen Schritt eines Registrierens der Koordinaten der Zugangspunkte und Schritte eines Wechselns von Zugangspunkten, die durch jedes der autonom geführten Fahrzeuge ausgeführt werden, die darin bestehen, das Trennen des WLAN-Kommunikationsmoduls von dem aktiven Zugangspunkt zu steuern, und eines Wiederverbindens mit einem ersten Zugangspunkt, dessen in der Datenbank registrierte Koordinaten den durch die Geolokalisierungsmittel bestimmten Koordinaten am nächsten sind,
**dadurch gekennzeichnet, dass** die Geolokalisierungsmittel der autonom geführten Fahrzeuge aus einem Mittel zum Messen der relativen Bewegung des Fahrzeugs in Bezug auf eine Mehrzahl von physikalischen Referenzelementen des Bewegungsbereichs bestehen, und dadurch, dass der Schritt des Wiederverbindens ferner darin besteht, das Wiederverbinden mit dem zweitnächsten Zugangspunkt zu steuern
- in dem Fall, in dem die Authentifizierungszeit des Kommunikationsmoduls mit dem ersten Zugangspunkt eine bestimmte Zeitdauer Tₐᵤₜ überschreitet
- und/oder in dem Fall, in dem die Antwortzeit des Servers auf einen durch das Kommunikationsmodul mit dem ersten Zugangspunkt übertragenen Ping eine bestimmte Dauer T_{ping} überschreitet
wobei das Verfahren darin besteht, den Sicherheitsstopp des Fahrzeugs in dem Fall zu steuern, in dem die Wiederverbindungszeit eine Dauer T_{Sicherheit} überschreitet.

2. Verfahren zum Steuern der Bewegung einer Flotte aus autonom geführten Fahrzeugen durch einen Überwachungsserver nach Anspruch 1,
**dadurch gekennzeichnet, dass** der Schritt des Registrierens der Koordinaten der Zugangspunkte darin besteht, zwischen einer Mehrzahl von geolokalisierten Punkten des Arbeitsbereichs ein Fahrzeug zum kartografischen Erfassen zu bewegen und bei der Immobilisierung des Fahrzeugs an einem Erfassungspunkt die Registrierung der geografischen Koordinaten sowie der Kennungen der detektierten Wifi-Zugangspunkte zu steuern, anschließend die Bewegung zu einem neuen Erfassungspunkt hin zu steuern, um eine digitale Karte zum Geolokalisieren der Zugangspunkte aufzubauen, wobei die Karte in dem lokalen Speicher jedes der autonom geführten Fahrzeuge registriert ist.

3. Verfahren zum Steuern der Bewegung einer Flotte aus autonom geführten Fahrzeugen durch einen Überwachungsserver nach Anspruch 2,
**dadurch gekennzeichnet, dass** es ferner einen Schritt des Registrierens der in der digitalen Karte fehlenden Zugangspunkte und ihrer Koordinaten durch mindestens einen Teil der autonom geführten Fahrzeuge und eine periodische Übertragung dieser Daten an den Überwachungsserver umfasst.

4. Verfahren zum Steuern der Bewegung einer Flotte aus autonom geführten Fahrzeugen durch einen Überwachungsserver nach Anspruch 1,
**dadurch gekennzeichnet, dass** die Bewegung des autonom geführten Fahrzeugs in Abhängigkeit von den von dem Überwachungsserver empfangenen Daten gesteuert wird, die während der Roaming-Sequenzen zwischengespeichert werden.

5. Verfahren zum Steuern der Bewegung einer Flotte aus autonom geführten Fahrzeugen durch einen Überwachungsserver nach Anspruch 1,
**dadurch gekennzeichnet, dass** der Rechner des autonom geführten Fahrzeugs den Sicherheitsstopp der Bewegung im Fall einer Überschreitung der vorbestimmten Wiederverbindungszeit steuert.

## Claims

1. Method for controlling, by means of a supervision server (100), the movement of a fleet of automated guided vehicles (10, 20) in a movement region which is equipped with a plurality of WiFi wireless access points (210, 220, 310), each of said vehicles comprising at least one geolocation means and a WiFi communication module, the method comprising a step of recording the coordinates of said access points, and comprising steps, which are carried out by each of said automated guided vehicles, of changing the access point consisting in controlling the disconnection of said WiFi communication module from the active access point and of reconnecting to a first access point of which the coordinates recorded in said database are closest to the coordinates determined by said geolocation means,
**characterized in that** said means for geolocating the automated guided vehicles consist of a means for measuring the relative movement of the vehicle with respect to a plurality of reference physical elements in the movement region, and **in that** said reconnection step further consists in controlling the reconnection to the second closest access point
- if the authentication waiting time of said module for communicating with the first access point exceeds a determined duration Tₐᵤₜ
- and/or if the response waiting time of said server to a ping transmitted by said module for communicating with the first access point exceeds a determined duration T_{ping}
the method consisting in controlling said vehicle so that it stops safely when the reconnection waiting time exceeds a duration T_{sécurité}.

2. Method for controlling, by means of a supervision server, the movement of a fleet of automated guided vehicles according to claim 1, **characterized in that** said step of recording the coordinates of said access points consists in moving between a plurality of geolocated points in the work region a cartographic acquisition vehicle and in controlling, while the vehicle is immobilized at an acquisition point, the recording of the geographic coordinates as well as the identifiers of the detected WiFi access points, and then in controlling the movement to a new acquisition point, in order to form a digital geolocation map of the access points, said digital map being recorded in the local memory of each of said automated guided vehicles.

3. Method for controlling, by means of a supervision server, the movement of a fleet of automated guided vehicles according to claim 2, **characterized in that** it further comprises a step of recording, by means of at least some of the automated guided vehicles, the access points which are absent from said digital map and their coordinates, and of periodically transferring these data to the supervision server.

4. Method for controlling, by means of a supervision server, the movement of a fleet of automated guided vehicles according to claim 1, **characterized in that** the movement of the automated guided vehicle is controlled on the basis of the data received from the supervision server and buffered during the roaming sequences.

5. Method for controlling, by means of a supervision server, the movement of a fleet of automated guided vehicles according to claim 1, **characterized in that** the computer of the automated guided vehicle controls safely stopping the movement if the predetermined reconnection waiting time is exceeded.
